# EUROPÄISCHE PATENTSCHRIFT

(11) **EP 0 608 750 B1**
(45) Veröffentlichungstag und Bekanntmachung des Hinweises auf die Patenterteilung: **18.12.1996**
(21) Anmeldenummer: 94100636.3
(22) Anmeldetag: 18.01.1994
(51) Int. Cl.: A01B 59/06

(54) **Teleskopierbare und verriegelbare Verbindungsgliedanordnung**
Telescoping and latchable connection member arrangement
Arrangement téléscopique et verrouillable pour membre d'attelage

(30) Priorität: 27.01.1993 US 9610
(43) Veröffentlichungstag der Anmeldung: 03.08.1994
(73) Patentinhaber: DEERE & COMPANY, Moline, Illinois 61265 (US)
(72) Erfinder: Bremner, Ronald Dean, Cedar Falls, Iowa 50613 (US)
(74) Vertreter: Feldmann, Bernhard

(56) Entgegenhaltungen:
- DE-B- 1 045 701
- FR-A- 2 061 572
- GB-A- 1 113 741
- US-A- 2 828 974

## Beschreibung

Die Erfindung betrifft eine teleskopierbare Verbindungsgliedanordnung mit einem ersten, einen Kanal enthaltenden Verbindungsglied, mit einem zweiten, im Kanal verschiebbar angeordneten Verbindungsglied und mit Verriegelungsmitteln zum lösbaren Halten des zweiten Verbindungsgliedes in einer bezüglich des ersten Verbindungsgliedes eingezogenen Lage gemäß den Merkmalen des Oberbegriffs des Patentanspruchs 1.

Solche teleskopierbaren Verbindungsgliedanordnungen finden beispielsweise bei Unterlenkern von Ackerschleppern Anwendung, die dem Ankoppeln von Anbaugeräten dienen. Der Unterlenker wird dabei in einem Kanal eines an dem Schlepper angelenkten Koppelgliedes geführt und durch einen zylindrischen Verriegelungsbolzen in seiner Lage festgehalten. Der Verriegelungsbolzen wird durch eine Feder in entsprechenden Bohrungen der Verbindungsglieder gehalten.

Ein derartiges teleskopierbares Verbindungsglied ist beispielsweise durch die FR-A-2.061.572 bekannt geworden. Es enthält ein Führungsrohr, das an seinem einen Ende ein axial verschiebbares und an seinem anderen Ende ein fest montiertes Teil aufnimmt. Im mittleren Bereich der zylindrischen Oberfläche des verschiebbaren Teils ist eine quer verlaufende zylindrische Kerbe eingelassen. Seitlich im Führungsrohr ist ein quer zu seiner Achse ausgerichteter verdrehbarer zylindrischer Verriegelungsbolzen gelagert. Der Bolzen ist auf einer Seite derart abgeflacht und so angeordnet, daß er in einer Verriegelungsstellung in das Führungsrohrinnere eingreift, während er in einer Entriegelungsstellung seine Abflachung dem Führungsrohrinneren zuwendet und nicht in dieses eingreift. Der Bolzen wird durch eine Feder in seine Verriegelungsstellung gedrängt und läßt sich durch einen Hebel gegen die Federkraft in die Entriegelungsstellung verdrehen. Wenn das axial verschiebbare Teil in das Führungsrohr eingeschoben wird und seine Kerbe die Position des Bolzens erreicht, verdreht sich der Bolzen aufgrund der Federkraft in seine Verriegelungsstellung und dringt in die Kerbe ein, so daß das verschiebbare Teil in dem Führungsrohr gegen axiale Verschiebung festgelegt ist.

Das bekannte Verbindungsglied muß genau gefertigt sein, um ordnungsgemäß zu funktionieren. Der Verriegelungszapfen ist ferner Scher- und Dehnkräften ausgesetzt und kann sich in seinen Bohrungen festfressen.

Eine andere bei Ackerschleppern bekannte teleskopierbare Zuggliedanordnung enthält ein Teil, das durch Schwerkraft in einen Schlitz am Zuggliedende hineinfällt. Auch diese Anordnung erfordert für eine problemlose Anwendung eine genaue Fertigung, was insbesondere dann schwierig ist, wenn die Teile geschmiedet werden.

Die US-A-3,643,976 beschreibt eine Verriegelung für eine Zugarmverlängerung, bei dem die Zugarmverlängerung in einem hohlen Zugglied teleskopartig geführt ist. Die Zugarmverlängerung ist an ihrem hinteren, in das Zugglied eingeführten Ende hakenförmig ausgebildet und weist hier eine zu seinem vorderen Ende ausgerichtete Fläche auf. Das Zugglied enthält eine Öffnung, über der ein Gehäuse angeordnet ist. Das Gehäuse nimmt einen Schaft auf, welcher an seinem einen Ende eine Verriegelungshandhabe und an seinem anderen Ende ein Verriegelungswiderlager trägt. An dem Verriegelungswiderlager greift eine Feder an, die es durch die Öffnung in dem Zugglied drückt, so daß es bei eingeschobener Zugarmverlängerung hinter dessen Fläche greift und die Zugarmverlängerung in dem Zugglied arretiert. Auch diese Anordnung erfordert einen hohen Fertigungsaufwand. Es ist daher eine teleskopierbare Zuggliedanordnung wünschenswert, die sich einfach herstellen läßt.

Die der Erfindung zugrunde liegende Aufgabe wird darin gesehen, eine teleskopierbare und verriegelbare Verbindungsgliedanordnung anzugeben, die lediglich einen geringen Fertigungsaufwand erfordert. Der Verriegelungsmechanismus soll keinen Scher- oder Dehn- und Zugkräften ausgesetzt sein. Probleme des Festsetzens oder Fressens sollen vermieden werden. Sich entsprechende rechte und linke Verbindungsgliedteile sollen identisch ausbildbar sein, so daß sich beispielsweise identische Schmiedestücke verwenden lassen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße teleskopierbare und verriegelbare Verbindungsgliedanordnung enthält ein hohles, beispielsweise an einem Schlepper montierbares erstes Verbindungsglied (Unterlenker) sowie ein zweites Verbindungsglied, an das Anbaugeräte montierbar sind, und das durch einen Kanal in dem ersten Verbindungsglied gleitend aufgenommen wird. In dem ersten Verbindungsglied ist eine zum Kanal offene Tasche eingeformt. In der Tasche ist eine Platte schwenkbar angeordnet, die durch eine Feder aus einer Entriegelungsstellung, bei der die Platte vollständig von der Tasche aufgenommen wird, in eine Verriegelungsstellung, bei der wenigstens ein Teil der Platte in den Kanal hineinragt, gedrückt wird. In das zweite Verbindungsglied ist eine Aussparung eingelassen. Eine Seite der Aussparung bildet eine Schulter, die mit der Platte in Eingriff bringbar ist, wodurch sich das zweite Verbindungsglied lösbar in einer eingezogenen Position festhalten läßt. Mit einem Betätigungsknopf läßt sich die Platte gegen die Kraft der Feder aus ihrer Verriegelungsstellung in die Tasche verschwenken, so daß das zweite Verbindungsglied frei ist und aus dem ersten Verbindungsglied herausgezogen werden kann.

Die erfindungsgemäße Anordnung läßt sich mit geringem Aufwand fertigen, ohne daß es auf die Einhaltung von Tolleranzen besonders ankäme. Sie besteht aus wenigen, unkomplizierten Einzelteilen. Bei der Verriegelung liegt eine Stirnfläche der Platte an der Schulter des zweiten Verbindungsgliedes an, so daß kein Teil der Verriegelung Scher- oder Zug- und Dehnkräften ausgesetzt ist. Ein Festklemmen oder Festfressen kann nicht auftreten. Rechte und linke Ausbildungen der Erfindung können aus identischen Teilen gebildet werden.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Teilschnittansicht einer erfindungsgemäßen teleskopierbaren Zuggliedanordnung,
- Fig. 2: eine Ansicht in Richtung der Pfeile 2-2 der Fig. 1, wobei zur Verdeutlichung ein Ausschnitt herausgebrochen ist,
- Fig. 3: eine Ansicht entlang der Linie 3-3 der Fig. 1,
- Fig. 4: eine perspektivische Darstellung eines Unterlenkers mit einem erfindungsgemäßen Kupplungsbereich und
- Fig. 5: eine ähnliche Ansicht wie Fig. 2, die jedoch eine alternative Ausgestaltung der Erfindung betrifft.

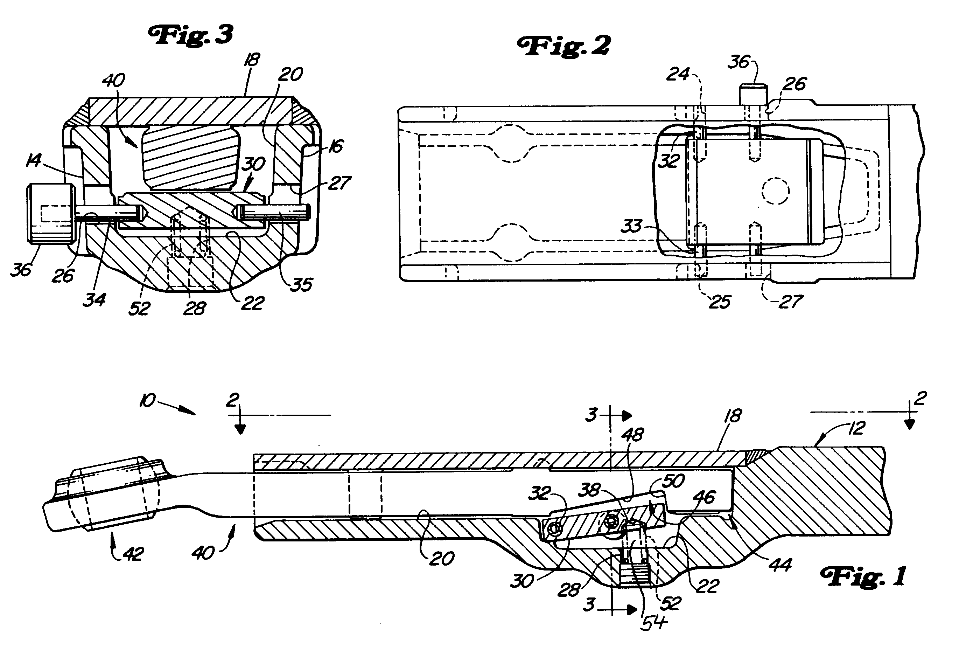

Aus den Figuren 1 bis 3 geht eine teleskopierbare Zugglied- oder Unterlenkeranordnung 10 hervor, welche ein hohles erstes, an einem nicht dargestellten Schlepper befestigbares Verbindungsglied 12 enthält. Der hintere, vom Schlepper weg weisende Bereich des Verbindungsgliedes 12 ist im wesentlichen U-förmig ausgebildet und enthält eine obere Wandung 14 und eine untere Wandung 16, was am besten aus Fig. 3 hervorgeht. Eine Platte 18 ist mit der unteren und oberen Wandung 14, 16 derart verschweißt, daß sie einen Kanal 20 einschließt. In die zwischen der unteren und oberen Wandung 16, 14 liegende vertikal ausgerichtete Basiswandung des U-förmigen ersten Verbindungsglieds 12 ist eine geschmiedete Tasche 22 eingeformt. Die Tasche 22 öffnet sich in den Kanal 20 und liegt im Bereich dessen vorderen, in Richtung Schlepper weisenden Endes. Zwei Zapflöcher 24 und 25 erstrecken sich senkrecht durch die Wandungen 14 und 16 und sind auf das hinteren Ende der Tasche 22 gerichtet. Zwei weitere Bohrungen 26 und 27 erstrecken sich vertikal durch die Wandungen 14 und 16 und sind auf den mittleren Bereich der Tasche 22 gerichtet. Eine Federbohrung 28 erstreckt sich horizontal durch eine Seite des Verbindungsglieds 12 in die Tasche 22 hinein.

Eine im wesentlichen rechteckige Verriegelungsplatte 30 ist innerhalb der Tasche 22 befestigt. Zwei Drehzapfen 32 und 33 sind mittels Preßsitz in entsprechende Bohrungen auf der oberen und unteren Stirnfläche der Verriegelungsplatte 30 und in der Nähe ihres hinteren Endes eingesetzt. Die Drehzapfen 32 und 33 werden drehbar von den Zapflöchern 24 und 25 aufgenommen. Zwei Stützbolzen 34 und 35 sind mittels Preßsitz in entsprechende Bohrungen in der Nähe des mittleren Bereichs der oberen und unteren Stirnfläche der Verriegelungsplatte 30 in diese eingesetzt. Die Stützbolzen 34 und 35 werden von den Bohrungen 26 und 27 aufgenommen. Die Durchmesser der Bohrungen 26 und 27 sind wesentlich größer als die Durchmesser der Stützbolzen 34 und 35, und das freie Spiel zwischen ihnen erlaubt es, daß sich die Verriegelungsplatte 30 zwischen einer Verriegelungsposition und einer Entriegelungsposition verschwenken läßt. Ein Betätigungselement oder Knopf 36 ist außerhalb der oberen Wandung 14 mit dem Ende des Stützbolzens 34 verbunden, so daß eine Bedienungsperson die Verriegelungsplatte 30 wunschgemäß um die Drehzapfen 32 und 33 verschwenken kann. Eine Sackbohrung 38 erstreckt sich horizontal teilweise in eine Seitenfläche der Verriegelungsplatte 30 hinein. Es sei hervorgehoben, daß der untere Stützbolzen 35 und die Bohrung 27 entfallen können, da die Drehzapfen 32 und 33 und die Bohrungen 24 und 25 ausreichen, um eine korrekte Ausrichtung der Verriegelungsplatte 30 in der Tasche 22 aufrechtzuerhalten.

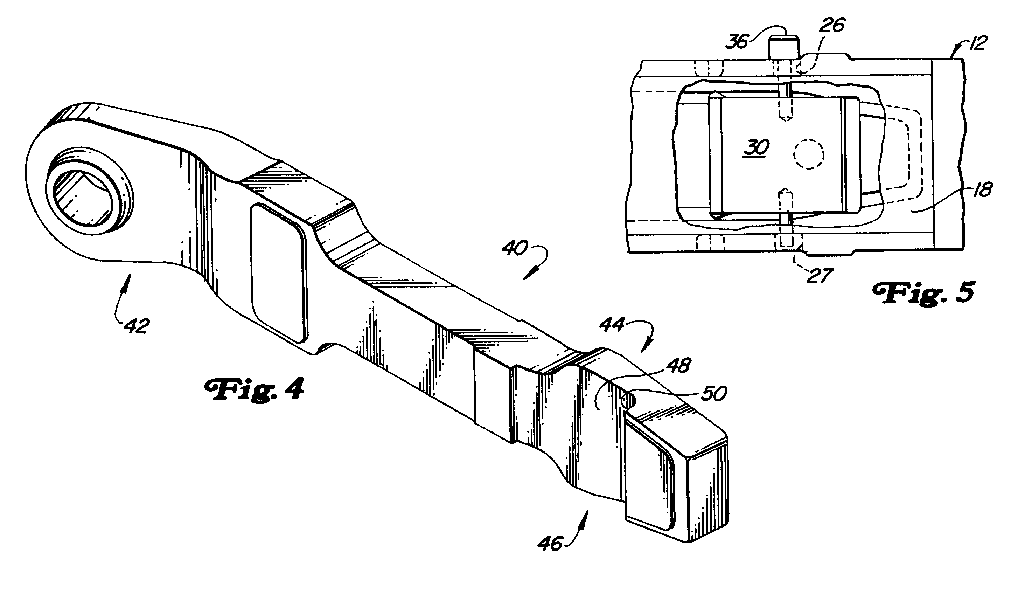

Wie am besten aus Fig. 4 ersichtlich, weist ein zweites Verbindungsglied 40 ein hinteres Ende 42, an das ein nicht dargestelltes Anbaugerät ankuppelbar ist, und ein vorderes Ende 44 auf. Das vordere Ende 44 ist in den Kanal 20 einschiebbar. Auf einer Seite des zweiten Verbindungsglieds 40, nahe, jedoch beabstandet zu seinem vorderen Ende 44 ist eine Aussparung 46 eingelassen. Die Aussparung 46 stellt im wesentlichen eine quer verlaufende Kerbe dar. Sie enthält eine Oberfläche 48, die in bezug auf eine Längsachse des zweiten Verbindungsgliedes 40 gegenüber dessen Oberfläche geneigt verläuft. Die Oberfläche 48 ist zur Seite und leicht nach vorn ausgerichtet und grenzt an eine Schulterfläche 50 an, die im wesentlichen quer zum Verbindungsglied 40 verläuft und nach hinten ausgerichtet ist.

Eine Schraubenfeder 52 ist in die Federbohrung 28 eingesetzt und wird durch eine Schraube 54, welche in einen äußeren Gewindeabschnitt der Federbohrung 28 eingeschraubt ist, in ihrer Ausrichtung gehalten. Das innere Ende der Schraubenfeder 52 wird durch die Sackbohrung 38 der Verriegelungsplatte 30 aufgenommen. Die Schraubenfeder 52 ist vorgespannt, um die Verriegelungsplatte 30 um die Achse der Drehzapfen 32 und 33 zu verschwenken und das vordere Ende der Verriegelungsplatte 30 aus der Tasche 22 heraus und in den Kanal 20 hinein zu drängen.

Fig. 5 zeigt eine bevorzugte Ausgestaltung der Erfindung, die Ähnlichkeiten mit der in den Fig. 1 bis 4 dargestellten Ausgestaltung aufweist, sich jedoch von dieser dadurch unterscheidet, daß die Zapflöcher 24 und 25 und die Drehzapfen 32 und 33 entfallen. In diesem Fall wird das hintere Ende der Verriegelungsplatte 30 schwenkbar in der Tasche 22 lediglich zwischen dem ersten Verbindungsglied 12 und der Oberfläche des zweiten Verbindungsgliedes 40 festgehalten. Wird ferner das zweite Verbindungsglied 40 aus dem ersten Verbindungsglied 12 herausgeschoben, so bedingt die relative Lage zwischen der Schraubenfeder 52 und den Stützbolzen 34, 35 und Bohrungen 26, 27, daß das hintere Ende der Verriegelungsplatte 30 in die in Fig. 1 gezeigte Lage gedrückt wird.

Wird das zweite Verbindungsglied 40 bezüglich Fig. 1 nach rechts in den Kanal 20 hinein bewegt, so greift das vordere Ende des Verbindungsgliedes 40 an der in den Kanal 20 ragenden Seitenfläche der Verriegelungsplatte 30 an und drückt die Verriegelungsplatte 30 gegen die Kraft der Schraubenfeder 52 in die Tasche 22. Erreicht die Aussparung 46 eine Lage, die benachbart zur Tasche 22 liegt, wie es in Fig. 1 dargestellt ist, schwenkt die Schraubenfeder 52 die Verriegelungsplatte 30 automatisch in eine Sperrposition, in der das freie, vordere Ende der Verriegelungsplatte 30 in die Aussparung 46 hineinragt. In dieser Sperrposition tritt die vordere Stirnfläche der Verriegelungsplatte 30 mit der Schulterfläche 50 der Aussparung 46 in Eingriff und verhindert ein unbeabsichtigtes Herausziehen des zweiten Verbindungsgliedes 40 aus dem Kanal 20. Die Verriegelungsplatte 30 läßt sich manuell aus der Aussparung 46 verschwenken, indem der Knopf 36 seitlich in Richtung der Außenfläche der Basiswandung des Uförmigen ersten Verbindungsglieds 12 verschoben wird, woraufhin das zweite Verbindungsglied 40 aus dem Kanal 20 herausgezogen oder bezüglich des Kanals 20 verlängert werden kann.

Mit dieser Konstruktion können gleiche Teile auf der linken und rechten Seite der nicht dargestellten Gerätekupplung des Schleppers verwendet werden. Die Verriegelungsplatte 30 ist lediglich Druckkräften und nicht Scher- oder Dehnkräften ausgesetzt. Die Verriegelungsplatte 30 ist nicht der Gefahr des Festfressens ausgesetzt, wie es bei anderen Konstruktionen der Fall ist. Werden die Zapflöcher 24 und 25 und die Drehzapfen 32 und 33 verwendet, dann brauchen lediglich die Zapflöcher 24 und 25 genau in das erste Verbindungsglied 12 gebohrt zu werden. Weitere Tolleranzen sind unkritisch.

Auch wenn die Erfindung lediglich anhand einiger Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen, wie sie in den Ansprüchen definert ist. So ist es beispielsweise möglich, in dem zweiten Verbindungsglied 40 weitere in Längsrichtung hintereinander liegende Aussparungen vorzusehen, so daß das zweite Verbindungsglied 40 sich in mehreren Positionen verriegeln läßt, wodurch sich unterschiedliche Anbauabstände relativ zum Schlepper ergeben. Die Erfindung läßt sich auch bei Unterlenkern anwenden, die vorn an einem Schlepper montierbar sind. In diesem Fall sind die obigen Angaben bezüglich vorn und hinten zu vertauschen.

## Patentansprüche

1. Teleskopierbare Verbindungsgliedanordnung mit einem ersten, einen Kanal (20) enthaltenden Verbindungsglied (12), mit einem zweiten, im Kanal (20) verschiebbar angeordneten Verbindungsglied (40) und mit Verriegelungsmitteln zum lösbaren Halten des zweiten Verbindungsgliedes (40) in einer bezüglich des ersten Verbindungsgliedes (12) eingezogenen Lage, wobei das zweite Verbindungsglied (40) eine zu einer Seite offene Aussparung (46) mit einer quer zu seiner Bewegungsrichtung ausgerichteten Schulterfläche (50) und das erste Verbindungsglied (12) eine zum Kanal (20) offene Tasche (22) aufweist, in der ein Verriegelungselement angebracht ist, welches durch Federmittel (52) aus einer unverriegelten Lage, bei der das Verriegelungselement im wesentlichen von der Tasche (22) aufgenommen wird, in eine verriegelte Lage bringbar ist, in der ein Bereich des Verriegelungselements in den Kanal (20) hineinragt und mit der Schulterfläche (50) in Eingriff tritt, um ein Herausziehen des zweiten Verbindungsgliedes (40) aus dem Kanal (20) zu verhindern, dadurch gekennzeichnet, daß das Verriegelungselement eine im wesentlichen rechteckige Verriegelungsplatte (30) ist, die in unverriegelter Lage im wesentlichen in der Tasche (22) versenkt ist und die durch die Federmittel (52) um ihr bezüglich der Einschubrichtung des zweiten Verbindungsgliedes (40) hinteres Ende in die verriegelte Lage schwenkbar ist, so daß ihr vorderes Ende in die Aussparung (46) hineinragt und eine vordere Stirnfläche der Verriegelungsplatte (30) mit der Schulterfläche (50) der Aussparung (46) in Eingriff tritt.

2. Verbindungsgliedanordnung nach Anspruch 1, dadurch gekennzeichnet, daß ein hinteres Ende der Verriegelungsplatte (30) verschwenkbar in der Tasche (22) zwischen einer Fläche des zweiten Verbindungsgliedes (40) und einer Fläche des ersten Verbindungsgliedes (12) gehalten wird.

3. Verbindungsgliedanordnung nach Anspruch 1 oder 2, dadurch gekennzeichnet, daß sich wenigstens ein Zapfloch (24, 25) durch eine Wandung des ersten Verbindungsgliedes (12) erstreckt, welches zu einer Seite der Tasche (22) ausgerichtet ist, und daß wenigstens ein Drehzapfen (32, 33) an einem Endbereich der Verriegelungsplatte (30) befestigt ist und durch das Zapfloch (24, 25) drehbar aufgenommen wird.

4. Verbindungsgliedanordnung nach Anspruch 3, dadurch gekennzeichnet, daß die Achsen des Zapflochs (24, 25) und des Drehzapfens (32, 33) vertikal ausgerichtet sind.

5. Verbindungsgliedanordnung nach einem der Ansprüche 1 bis 4, dadurch gekennzeichnet, daß sich durch eine Wandung des ersten Verbindungsgliedes (12) wenigstens eine Bohrung (26, 27) erstreckt, die zu dem zentralen Bereich der Tasche (22) ausgerichtet ist, daß wenigstens ein Stützbolzen (34, 35) im mittleren Bereich der Verriegelungsplatte (30) befestigt ist, daß der Durchmesser der Bohrung (26, 27) größer ist als ein Durchmesser des Stützbolzens (34, 35), so daß der Stützbolzen (34, 35) locker von der Bohrung (26, 27) aufgenommen wird, wobei der Stützbolzen (34, 35) mit der Bohrungswandung zusammen wirkt, um die Schwenkbewegung der Verriegelungsplatte (30) zu begrenzen.

6. Verbindungsgliedanordnung nach Anspruch 5, dadurch gekennzeichnet, daß ein manuell betätigbarer Knopf (36) an einem Ende des Stützbolzens (34) außerhalb des ersten Verbindungsgliedes (12) befestigt ist.

7. Verbindungsgliedanordnung nach einem der Ansprüche 1 bis 6, dadurch gekennzeichnet, daß sich eine Federbohrung (28) quer durch die Wandung des ersten Verbindungsgliedes (12) in die Tasche (22) erstreckt und daß das Federmittel (52) in der Federbohrung (28) derart angeordnet ist, daß ein Ende der Federmittel (52) an der Verriegelungsplatte (30) angreift.

8. Verbindungsgliedanordnung nach Anspruch 7, dadurch gekennzeichnet, daß die Verriegelungsplatte (30) eine Sackbohrung (38) enthält, die das eine Ende der Federmittel (52) aufnimmt, daß ein äußerer Bereich der Federbohrung (28) als Gewindeabschnitt ausgebildet ist und daß eine Schraube (54) in den Gewindeabschnitt einschraubbar ist, um die Federmittel (52) in der Federbohrung (28) zu halten.

9. Verbindungsgliedanordnung nach einem der Ansprüche 1 bis 8, dadurch gekennzeichnet, daß sich ein oberes Zapfloch (24) durch eine obere Wandung des ersten Verbindungsgliedes (12) erstreckt, daß sich ein unteres Zapfloch (25) durch eine untere Wandung des ersten Verbindungsgliedes (12) erstreckt, daß die Zapflöcher (24, 25) zu der hinteren Seite der Tasche (22) ausgerichtet sind, daß ein an dem hinteren Ende der Verriegelungsplatte (30) befestigter oberer Drehzapfen (32) drehbar von dem oberen Zapfloch (24) aufgenommen wird und daß ein an einem Ende der Verriegelungsplatte (30) befestigter unterer Drehzapfen (33) drehbar von dem unteren Zapfloch (25) aufgenommen wird.

10. Verbindungsgliedanordnung nach einem der Ansprüche 1 bis 9, dadurch gekennzeichnet, daß das zweite Verbindungsglied (40) eine Aussparung (46) mit einer nach hinten ausgerichteten Schulterfläche (50) aufweist, die mit einer Stirnfläche der Verriegelungsplatte (30) in Eingriff tritt.

11. Verbindungsgliedanordnung nach einem der Ansprüche 1 bis 10, dadurch gekennzeichnet, daß in das zweite Verbindungsglied (40) eine Aussparung (46) eingeformt ist mit einer zur Seite und schräg nach vorn gerichteten Grundfläche (48), die bezüglich der Längsausrichtung des zweiten Verbindungsglieds (40) geneigt ist.

## Claims

1. A telescopic link assembly with a first link (12) having a channel (20), a second link (40) slidably arranged in the channel (20), and locking means for releasably retaining the second link (40) in a retracted position relative to the first link (12), wherein the second link (40) has a recess (46) open to one side, with a shoulder surface (50) transverse to its direction of movement and the first link (12) has a pocket (22) open to the channel (20), in which a locking element is fitted and can be brought by spring means (52) out of an unlocked position, in which the locking element is received substantially within the pocket (22), into a locked position, in which a region of the locking element projects into the channel (20) and comes into engagement with the shoulder surface (50), in order to prevent the second link (40) being pulled out of the channel (20), characterized in that the locking element is a substantially rectangular locking plate (30) which is substantially sunk into the pocket (22) in the unlocked position and which can be pivoted by the spring means (52) about its end at its rear relative to the direction of insertion of the second link (40) into the locked position, so that its front end projects into the recess (46) and a leading end surface of the locking plate (30) comes into engagement with the shoulder surface (50) of the recess (46).

2. A link assembly according to claim 1, characterized in that a rear end of the locking plate (30) is retained pivotally in the pocket (22) between a surface of the second link (40) and a surface of the first link (12).

3. A link assembly according to claim 1 or 2, characterized in that at least one pivot hole (24, 25) extends through a wall of the first link (12) and is aligned with one end of the pocket (22), and in that at least one pivot pin (32, 33) is fixed to an end region of the locking plate (30) and is received rotatably by the pivot hole (24, 25).

4. A link assembly according to claim 3, characterized in that the axes of the pivot hole (24, 25) and the pivot pin (32, 33) are oriented vertically.

5. A link assembly according to any of claims 1 to 4, characterized in that at least one bore (26, 27) extends through a wall of the first link (12) and is aligned with a central region of the pocket (22), in that at least one stud (34, 35) is fixed in the central region of the locking plate (30), in that the diameter of the bore (26, 27) is greater than a diameter of the stud (34, 35), so that the stud (34, 35) is received loosely in the bore (26, 27), the stud (34, 35) cooperating with the bore wall in order to limit the pivotal movement of the locking plate (30).

6. A link assembly according to claim 5, characterized in that a manually operable knob (36) is fixed on one end of the stud (34) outside the first link (12).

7. A link assembly according to any of claims 1 to 6, characterized in that a spring bore (28) extends transversely through the wall of the first link (12) into the pocket (22) and in that spring means (52) are so arranged in the spring bore (28) that one end of the spring means (52) engages the locking plate (30).

8. A link assembly according to claim 7, characterized in that the locking plate (30) has a blind bore (38) which receives one end of the spring means (52), in that an outer region of the spring bore (28) is formed as a threaded section, and in that a screw (54) can be screwed into the threaded section in order to retain the spring means (52) in the spring bore (28).

9. A link assembly according to any of claims 1 to 8, characterized in that an upper pivot hole (24) extends through an upper wall of the first link (12), in that a lower pivot hole (25) extends through a lower wall of the first link (12), in that the pivot holes (24, 25) are aligned with the rear end of the pocket (22), in that an upper pivot pin (32) fixed at the rear end of the locking plate (30) is rotatably received by the upper pivot hole (24) and in that a lower pivot pin (33) fixed on an end of the locking plate (30) is rotatably received by the lower pivot hole (25).

10. A link assembly according to any of claims 1 to 9, characterized in that the second link (40) has a recess (46) with a rearwardly directed shoulder surface (50), which comes into engagement with an end surface of the locking plate (30).

11. A link assembly according to any of claims 1 to 10, characterized in that a recess (46) is formed in the second link (40), with a bottom surface (48) at the side and aligned obliquely forwards and inclined relative to the longitudinal direction of the second link (40).

## Revendications

1. Dispositif télescopique à d'organes d'attelage comprenant un premier organe d'attelage (12) contenant un conduit (20), un second organe d'attelage (40) disposé de manière à être déplaçable dans le conduit (20), et des moyens de verrouillage pour retenir de façon amovible le second organe d'attelage (40) dans une position rétractée par rapport au premier organe d'attelage (12), et dans lequel le second organe d'attelage (40) possède un évidement (46) ouvert d'un côté et comportant une surface d'épaulement (50) orientée transversalement par rapport à la direction de déplacement de cet organe d'attelage, et le premier organe d'attelage (12) comporte un logement (22) ouvert en direction du conduit (20) et dans laquelle est disposé un élément de verrouillage, qui peut être amené par des moyens formant ressort (52), depuis une position déverrouillée, dans laquelle l'élément de verrouillage est logé essentiellement dans le logement (22), dans une position verrouillée, dans laquelle une partie de l'élément de verrouillage pénètre dans le conduit (20) et engrène avec la surface d'épaulement (50), de manière à empêcher un dégagement du second organe d'attelage (40) hors du conduit (20), caractérisé en ce que l'élément de verrouillage est une plaque de verrouillage essentiellement rectangulaire (30) qui, dans la position déverrouillée, est essentiellement en renfoncement dans le logement (21) et qui, sous l'action des moyens formant ressort (52), est amenée par pivotement, autour de son extrémité arrière par rapport à la direction d'insertion du second organe d'attelage (40), dans la position verrouillée de sorte que son extrémité avant pénètre dans l'évidement (46) et qu'une surface frontale avant de la plaque de verrouillage (30) engrène avec la surface d'épaulement (50) de l'évidement (46).

2. Dispositif à organes d'attelage selon la revendication 1, caractérisé en ce qu'une extrémité arrière de la plaque de verrouillage (30) est retenue de manière à pouvoir pivoter dans le logement (22) entre une surface du second organe d'attelage (40) et une surface du premier organe d'attelage (12).

3. Dispositif à organes d'attelage selon la revendication 1 ou 2, caractérisé en ce qu'au moins un trou de tourillon (24,25) traverse une paroi du premier organe d'attelage (12), qui est alignée sur un côté du logement (22), et qu'au moins un tourillon (32,33) est fixé sur une partie d'extrémité de la plaque de verrouillage (30) et est logé, de manière à pouvoir tourner, dans le trou de tourillon (24,25).

4. Dispositif à organes d'attelage selon la revendication 3, caractérisé en ce que les axes du trou de tourillon (24,25) et du tourillon (32,33) sont orientés verticalement.

5. Dispositif à organes d'attelage selon l'une des revendication 1 à 4, caractérisé en ce qu'une paroi du premier organe d'attelage (12) est traversée par au moins un perçage (26,27), qui est orienté vers la partie centrale du logement (25), qu'au moins un goujon d'appui (34,35) est fixé dans la zone médiane de la plaque de verrouillage (30), que le diamètre du perçage (26,27) est supérieur à un diamètre du goujon d'appui (34,35) de sorte que le goujon d'appui (34,35) est logé d'une manière lâche dans le perçage (26,27), le goujon d'appui (34,35) coopérant avec la paroi du perçage pour limiter le mouvement de pivotement de la plaque de verrouillage (30).

6. Dispositif à organes d'attelage selon la revendication 5, caractérisé en ce qu'une tête (36) pouvant être actionnée manuellement est fixée à une extrémité du goujon d'appui (34), à l'extérieur du premier organe d'attelage (12).

7. Dispositif à organes d'attelage selon l'une des revendications 1 à 6, caractérisé en ce qu'un perçage (28) pour ressort s'étend transversalement à travers la paroi du premier organe d'attelage (12), en débouchant dans le logement (22) et que le moyen formant ressort (52) est disposé dans le perçage pour ressort (28) de telle sorte qu'une extremité des moyens formant ressort (52) est accrochée à la plaque de verrouillage (30).

8. Dispositif à organes d'attelage selon la revendication 7, caractérisé en ce que la plaque de verrouillage (30) contient un perçage borgne (38), qui loge une extrémité du moyen formant ressort (52), qu'une partie extérieure du perçage pour ressort (28) est agencée sous la forme d'une section filetée et qu'une vis (54) peut être vissée dans la section filetée de manière à fixer le moyen formant ressort (52) dans le perçage pour ressort (28).

9. Dispositif à organes d'attelage selon l'une des revendications 1 à 8, caractérisé en ce qu'un trou supérieur de tourillon (24) traverse une paroi supérieure du premier organe d'attelage (12), qu'un trou inférieur du tourillon (25) traverse une paroi inférieure du premier organe d'attelage (12), que les trous de tourillon (24,25) sont dirigés vers le côté arrière du logement (21), qu'un tourillon supérieur (32), qui est fixé à l'extrémité arrière de la plaque de verrouillage (30), est logé de manière à pouvoir tourner dans le trou supérieur de tourillon (24), et qu'un tourillon inférieur (33), fixé à une extrémité de la plaque de verrouillage (30), est logé de manière à pouvoir tourner dans le trou inférieur de tourillon (25).

10. Dispositif à organes d'attelage selon l'une des revendications 1 à 9, caractérisé en ce que le second organe d'attelage (40) possède un évidement (46) comportant une surface d'épaulement (50) qui est tournée vers l'arrière et qui engrène avec une face frontale de la plaque de verrouillage (30).

11. Dispositif à organes d'attelage selon l'une des revendications 1 à 10, caractérisé en ce que dans le second organe d'attelage (40) est ménagé un évidement (46), comportant une surface de base (48), qui est dirigée vers le côté et obliquement vers l'avant et qui est inclinée par rapport à la direction longitudinale du second organe d'attelage (40).
